# EUROPÄISCHE PATENTSCHRIFT

(11) **EP 3 420 430 B1**
(45) Veröffentlichungstag und Bekanntmachung des Hinweises auf die Patenterteilung: **04.09.2019**
(21) Anmeldenummer: 18706396.1
(22) Anmeldetag: 24.01.2018
(51) Int. Cl.: G05D 23/13, E03C 1/04

(54) **THERMOSTAT-MISCHVENTIL**
THERMOSTAT MIXING VALVE
VANNE DE MÉLANGE THERMOSTATIQUE

(30) Priorität: 13.02.2017 DE 202017100756 U
(43) Veröffentlichungstag der Anmeldung: 02.01.2019
(73) Patentinhaber: Flühs Drehtechnik GmbH, 58515 Lüdenscheid (DE)
(72) Erfinder: LANGE, Lutz, 58511 Lüdenscheid (DE)
(74) Vertreter: Patentanwälte Dörner & Kötter PartG mbB
(86) Internationale Anmeldenummer: PCT/EP2018/051749
(87) Internationale Veröffentlichungsnummer: WO 2018/145905

(56) Entgegenhaltungen:
- DE-A1- 10 202 560
- DE-A1-102007 055 455
- FR-A1- 2 869 087

## Beschreibung

Die Erfindung betrifft ein Thermostat-Mischventil für Sanitärarmaturen, mit einem Kopfstück, in dem über eine drehbar gelagerte Spindel ein Kegel axial bewegbar angeordnet ist, und einer Durchtrittshülse mit Fenstern für den Zulauf von warmen und kaltem Wasser, in der ein über eine Feder vorgespannter Schlitten axial bewegbar ist, der mit einem einen Stellkolben aufweisenden Thermoelement verbunden ist, wobei in Abhängigkeit der Bewegung des Schlittens der Zulauf von warmen und kaltem Wasser durch die Fenster regelbar ist.

Thermostat-Mischventile der hier betrachteten Art finden Anwendung in thermostatisch regelbaren Brause- und/oder Wannen-Mischarmaturen sowie Bidet- und Waschtischarmaturen. Bei diesen Armaturen ist einerseits die Wassermenge durch den Benutzer regelbar, andererseits die gewünschte Wassertemperatur einstellbar. Die Armaturen verfügen über einen Kaltwasser- und einem Warmwasserzulauf. Beide Zuläufe münden in einer Mischkammer, die mit dem Auslauf der Armatur verbunden ist. Im Bereich der Mischkammer ist ein Thermoelement vorgesehen, das die vom Benutzer eingestellte Temperatur regelt. Das Thermoelement ist in der Lage, auf Temperaturschwankungen des Mischwassers zu reagieren und in Abhängigkeit davon entweder den Kaltwasser-, oder den Warmwasser-Zulauf zu drosseln bzw. freizugeben, so dass die vom Benutzer gewünschte Temperatur annähernd konstant bleibt.

Derartige Thermostat-Mischventile werden in DE 102 02 560 B4, DE 10 2007 055 455 A1 und FR 2 869 087 A1 beschrieben.

Bei Thermostat-Mischventilen der eingangs genannten Art besteht häufig die Gefahr, das im Falle eines Defekts an dem Thermoelement keine einwandfreie Funktion des Ventils mehr gegeben ist, wodurch insbesondere die Gefahr besteht, dass sich der Schlitten aufgrund der Federkraft in Richtung einer Absperrung des Kaltwasser-Zulaufs bewegt. In diesem Fall strömt ausschließlich heißes Wasser durch den Warmwasser-Zulauf in das Ventil. Da das Thermoelement defekt ist, besteht nicht mehr die Möglichkeit einer selbständigen Reaktion. Für den Benutzer besteht die Gefahr sich an heißem Wasser zu verbrühen. Um dieser Gefahr entgegenzuwirken, wird in der DE 102 02 560 B4 vorgeschlagen, den Kegel um einen Kragen zu verlängern, der in den Schlitten hineinragt, wodurch eine Berührung von Kragen und Schlitten ermöglicht ist. Dieses Thermostat-Mischventil, das es aufgrund des verlängerten Kragens ermöglicht, dass ein mechanischer Schluss zustande kommt, der ein Verschieben des Schlittens in Richtung des Warmwasserzulaufs ermöglicht, hat sich in der Praxis bewährt. Dabei ist dieses Mischventil jedoch komplex aufgebaut, wobei zahlreiche Flächen innerhalb des Ventils im eingebauten Zustand mit Wasser benetzt sind, wodurch Beeinträchtigungen durch Kalkablagerungen oder ähnlichem auftreten können.

Hier will Erfindung Abhilfe schaffen. Der Erfindung liegt die Aufgabe zugrunde, ein Thermostat-Mischventil der vorgenannten Art bereitzustellen, das einfach und insbesondere modular aufgebaut ist und bei dem die mit Wasser benetzten Flächen reduziert sind. Gemäß der Erfindung wird diese Aufgabe durch ein Thermostat-Mischventil mit den Merkmalen des Patentanspruchs 1 gelöst.

Mit der Erfindung ist ein Thermostat-Mischventil für Sanitärarmaturen bereitgestellt, das einfach und insbesondere modular aufgebaut ist und bei dem mit Wasser benetzte Flächen reduziert sind. Dadurch, dass der Kegel eine Buchse umfasst, die an ihrer der Spindel abgewandten Unterseite über einen Boden verschlossen ist und in der ein Kegelkolben axial bewegbar angeordnet ist, der in Richtung des Bodens über eine Feder vorgespannt ist, wobei in dem Boden ein mit dem Kegelkolben axial fluchtender Koppelkanal angeordnet ist, der zugleich axial mit dem Stellkolben des Thermoelements fluchtet und in den der Kegelkolben und/oder der Stellkolben des Thermoelements hineinbewegbar sind, sind Feder und Kolben gegenüber dem Wasser abgeschottet. Die Verbindung zwischen dem in der Durchtrittshülse angeordneten Schlitten mit dem in dem Kopfstück angeordneten Kegelkolben erfolgt durch den in dem Boden der Buchse des Kegels angeordneten Koppelkanal, wobei in einer oberen Stellung des Schlittens in Warmwasserposition oder auch in Mischwasserposition der Stellkolben an dem Kegelkolben anliegt, wobei der Boden der Buchse beabstandet zu dem Schlitten ist. In einer unteren Stellung des Schlittens in Kaltwasserposition sind Kegelkolben und Stellkolben jedoch entkoppelt, wobei der Boden der Hülse des Kegels auf dem Schlitten aufliegt. In dieser Kontaktstellung erfolgt also eine Umgehung des Thermoelements, wodurch in dem Fall, dass das Thermoelement defekt ist, eine weitere, wenn auch eingeschränkte Steuerung des Schlittens direkt über den Boden der Buchse des Kegels erfolgen kann.

In Weiterbildung der Erfindung ist die Buchse an ihrer der Spindel zugewandten Oberseite über eine Deckseite verschlossen, wobei die Deckseite eine Führungsbohrung aufweist, in welcher der Kegelkolben geführt ist. Hierdurch ist eine weitere Abschottung des Buchseninnenraums erzielt. Zugleich ist die axiale Führung des Kegelkolbens innerhalb der Buchse verbessert.

In Ausgestaltung der Erfindung weist der Kegelkolben einen Kolbenzapfen auf, mit dem er in den Koppelkanal hineinragt. Hierdurch ist die Führung des Kegelkolbens weiter verbessert. Zugleich erfolgt durch den Kolbenzapfen ein Verschluss des Bodens der Buchse, wodurch einem Wassereintritt in den Buchseninnenraum entgegengewirkt ist.

In weiterer Ausgestaltung der Erfindung weist die Buchse an ihrem der Spindel abgewandten Ende eine Kegelscheibe mit einem Anschlagkörper auf, der zentrisch mit einer Bohrung versehen ist, die den Koppelkanal bildet, welche Kegelscheibe den Boden der Buchse bildet, mit der sie fest verbunden ist. Dabei ist der Anschlagkörper vorzugsweise in Form eines Anschlagkegels oder eines Anschlagzylinders ausgebildet. Hierdurch ist ein Sitz für die innerhalb der Buchse angeordnete Feder gebildet.

In weiterer Ausgestaltung der Erfindung ist die Kegelscheibe an die Buchse angebördelt. Hierdurch ist eine einfache form- und kraftschlüssige Verbindung der Kegelscheibe mit der Buchse erzielt.

In Weiterbildung der Erfindung weist der Kegelkolben eine Einformung auf, die mit dem Anschlagkörper der Kegelscheibe korrespondiert und durch die der Anschlagkörper zumindest bereichsweise, vorzugsweise vollständig aufnehmbar ist. Hierdurch ist eine Führung des Kegelkolbens mit gleichzeitiger Möglichkeit des Verschlusses des Koppelkanals erzielt.

In Ausgestaltung der Erfindung weist das Kopfstück an seinem der Spindel entgegengesetzten Ende einen mit einem Innengewinde versehenen axialen Kragen auf, in das die Durchtrittshülse einschraubbar ist, die hierzu mit einem Außengewinde versehen ist, wobei sich der Kegel in seiner oberen, der Spindel zugewandten Endstellung oberhalb des Kragens befindet. Hierdurch ist eine einfache Bestückung des Ventiloberteils mit der als modulare Baugruppe ausgebildeten Durchtrittshülse ermöglicht. Dabei ist durch die Positionierung des Kegels in einer Endstellung oberhalb des Kragens einer Beschädigung des Kegels im Zuge der Bestückung mit der Durchtrittshülse entgegengewirkt.

In weiterer Ausgestaltung der Erfindung ist an dem Kragen endseitig ein umlaufender Absatz angeformt, der eine radiale Dichtungsnut begrenzt, die einen Dichtring aufnimmt, wobei an der Durchtrittshülse zwischen deren Fenstern ein umlaufender Steg angeordnet ist, der eine radiale Dichtungsnut aufweist, die einen Dichtring aufnimmt und wobei zwischen dem Absatz des Kopfstücks und dem Steg der Durchtrittshülse bevorzugt ein Siebmantelgeflecht angeordnet ist. Hierdurch ist eine beidseitige Abdichtung des Kaltwasserzulauffensters der Durchtrittshülse in einer Armatur erzielt. Durch das bevorzugt zwischen den beiden Dichtringen angeordnete Siebmantelgeflecht ist zugleich einer Verschmutzung des Thermostat-Mischventils entgegengewirkt.

In Weiterbildung der Erfindung ist die Durchtrittshülse mit einem Bodenstück versehen, dass einen Raum begrenzt, in dem der mit dem Thermoelement verbundene Schlitten angeordnet ist. Hierdurch ist eine abgeschlossene Baugruppe der mit dem Thermoelement sowie dem Schlitten bestückten Durchtrittshülse als Modul erzielt.

In weiterer Ausgestaltung der Erfindung weist die Durchtrittshülse an ihrer der Spindel zugewandten Oberseite einen umlaufenden radialen Kragen auf, der einen Anschlag für den Schlitten bildet und der eine Durchtrittsöffnung für einen an dem Schlitten angeformt Führungskragen begrenzt, in dem der Stellkolben des Thermostatelements geführt ist. Hierdurch ist eine weitere Abdichtung der Buchse des Kegels gegenüber eindringendem Wasser erzielt. Der aus der Durchtrittshülse heraustretende Stellkolben des Thermoelements ist so gut gegenüber der Durchtrittshülse abgedichtet.

In Weiterbildung der Erfindung fluchtet der Führungskragen des Schlittens mit dem Koppelkanal, wodurch der Koppelkanal fortgeführt ist. Hierdurch ist eine optimale Zusammenführung von Stellkolben und Kegelkolben erzielt. In dem Fall, dass der Boden der Hülse des Kegels auf dem Schlitten aufliegt, ist ein durchgehender Koppelkanal zwischen Hülsenboden und Führungskragen des Schlittens gebildet.

In Ausgestaltung der Erfindung weist die Durchtrittshülse einen axialen Kragen auf, der mit dem Außengewinde versehen ist, wobei konzentrisch zu dem Kragen die Durchtrittsöffnung umrahmend ein ringförmiger Absatz angeformt ist, wodurch eine Ringnut begrenzt ist. Dabei ist bevorzugt an der Buchse an ihrer der Spindel abgewandten Seite ein umlaufender Steg angeordnet, dessen Innendurchmesser im Wesentlichen dem Außendurchmesser des ringförmigen Absatzes der Durchtrittshülse entspricht und der in die Ringnut einführbar ist. Hierdurch ist eine Führung der Buchse zur Anlage des Bodens der Buchse auf dem Schlitten in Kaltwasserstellung erzielt. In dem Fall, dass der Boden durch eine an die Buchse angebördelte Kegelscheibe gebildet ist, ist dieser Steg durch die Bördelkante gebildet.

In weiterer Ausgestaltung der Erfindung ist in dem ringförmigen Absatz eine radiale Dichtungsnut eingebracht, die einen Dichtring aufnimmt. Hierdurch ist eine Abdichtung des an dem Schlitten angeformten Führungskragens gegenüber der Durchtrittshülse erzielt.

In Weiterbildung der Erfindung weist das Bodenstück bodenseitig eine Ringschiebscheibe auf, durch welche das Thermoelement hindurchragt. Hierdurch ist eine optimale Umspülung des Thermoelements mit Mischwasser erzielt.

Bevorzugt ist zwischen der Ringsiebscheibe und dem Schlitten eine Feder angeordnet, über den der Schlitten in Richtung des radialen Kragens der Durchtrittshülse vorgespannt ist.

In Ausgestaltung der Erfindung ist das Bodenstück mit einem Außengewinde versehen, mit dem es in ein endseitig in der Durchtrittshülse angeordnetes Innengewinde einschraubbar ist. Hierdurch ist die Montage der modulartig ausgebildeten Baugruppe der Durchtrittshülse mitsamt Schlitten, Thermoelement und Feder an die Baugruppe des Kopfstücks erleichtert.

In weiterer Ausgestaltung der Erfindung ist an dem Bodenstück das Außengewinde begrenzend ein umlaufender Steg angeordnet, der eine radiale Dichtungsnut aufweist, die einen Dichtring aufnimmt, wobei zwischen dem Steg, der Durchtrittshülse und dem Steg des Bodenstücks bevorzugt ein Siebmantelgeflecht angeordnet ist. Hierdurch ist eine beidseitige Abdichtung des Warmwasserzulauffensters der Durchtrittshülse erzielt. Durch das bevorzugt angeordnete Siebmantelgeflecht ist einer Verschmutzung der Durchtrittshülse entgegengewirkt.

Andere Weiterbildungen und Ausgestaltungen der Erfindung sind in den übrigen Unteransprüchen angegeben. Ein Ausführungsbeispiel der Erfindung ist in den Zeichnungen dargestellt wird nachfolgend im Einzelnen beschrieben. Es zeigen:
- Figur 1: die schematische Darstellung eines Thermostat-Mischventils für Sanitärarmaturen im Teilschnitt
a) in Schlittenposition "Warmwasserzulauf";
b) in Schlittenposition "Mischwasserzulauf";
c) in Schlittenposition "Kaltwasserzulauf";

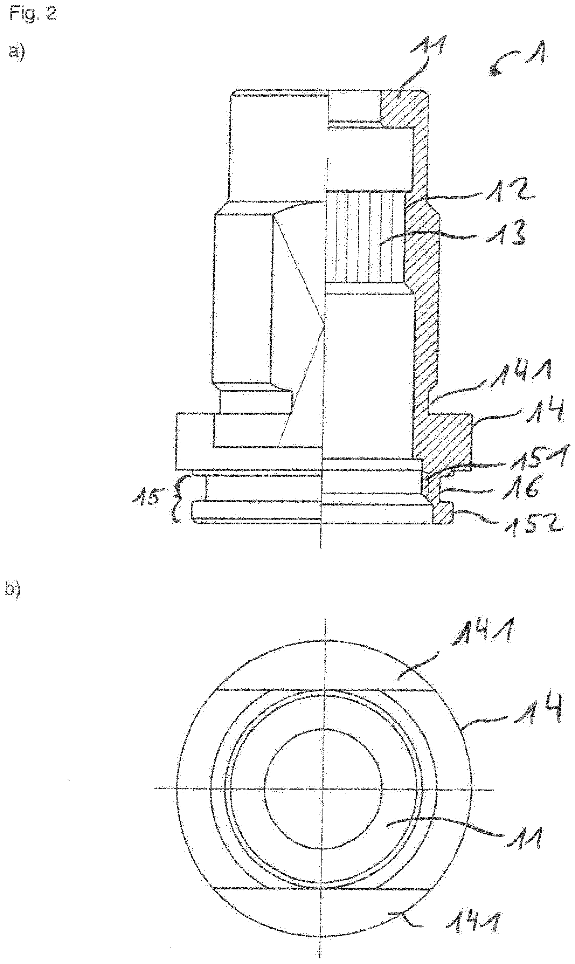

- Figur 2: die Darstellung des Kopfstücks des Thermostat-Mischventils aus Figur 1
a) im Teilschnitt;
b) in der Draufsicht;

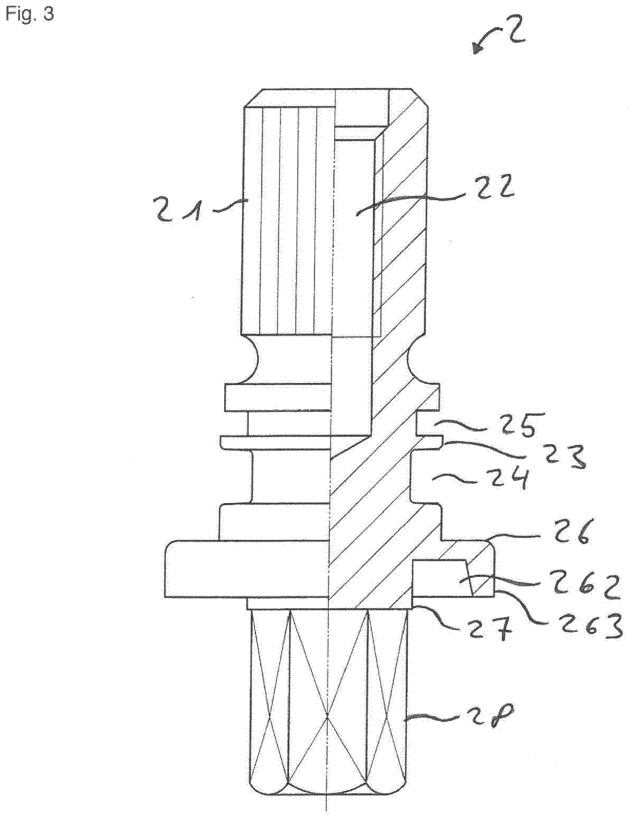

- Figur 3: die Darstellung der Spindel des Thermostat-Mischventils aus Figur 1 im Teilschnitt;

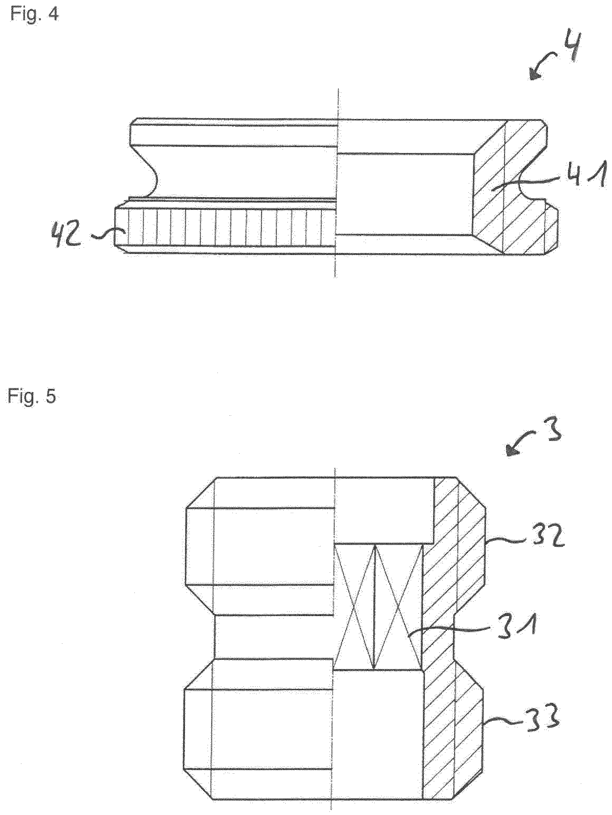

- Figur 4: die Darstellung des Druckstücks des Thermostat-Mischventils aus Figur 1 im Teilschnitt;
- Figur 5: die Darstellung des Gewinderings des Thermostat-Mischventils aus Figur 1 im Teilschnitt;

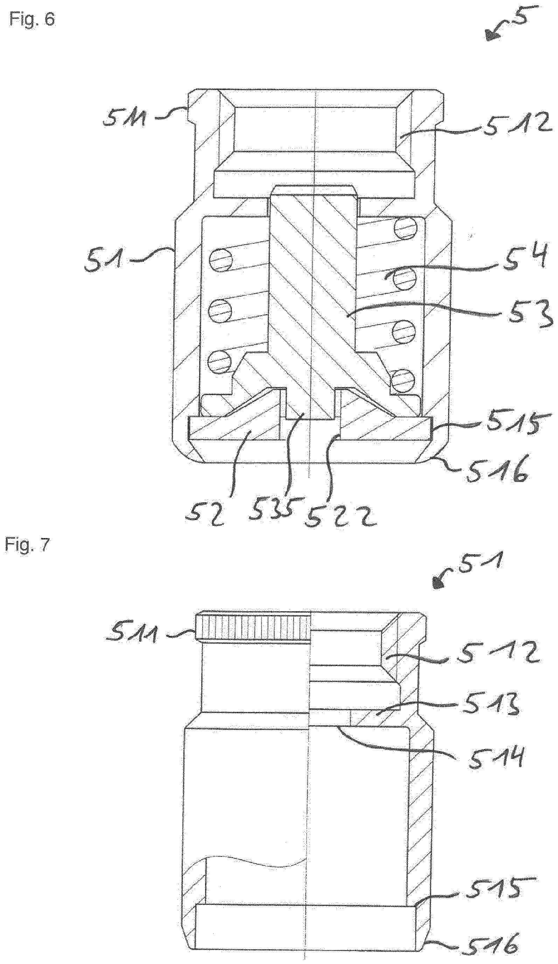

- Figur 6: die Darstellung des Kegels des Thermostat-Mischventils aus Figur 1 im Längsschnitt;
- Figur 7: die Buchse des Kegels aus Figur 6 im Teilschnitt;

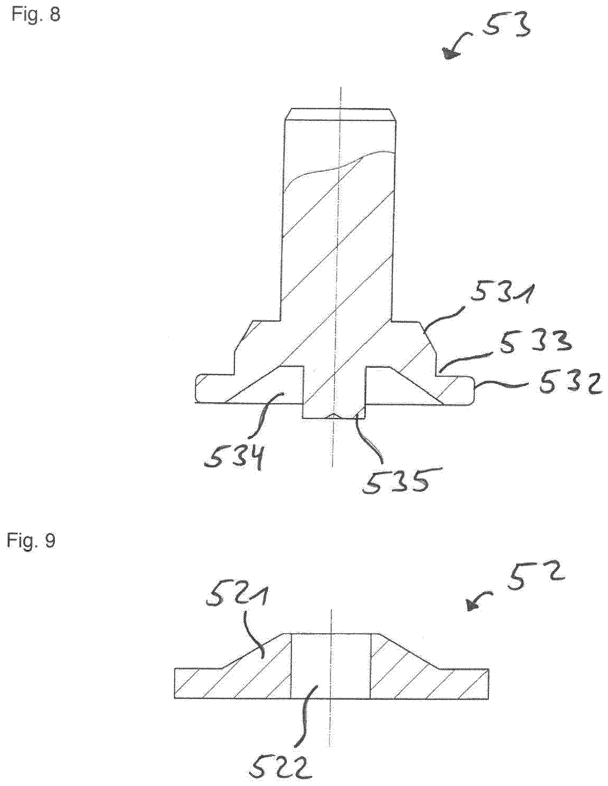

- Figur 8: den Kegelkolben des Kegels aus Figur 6 im Teilschnitt;
- Figur 9: die Kegelscheibe des Kegels aus Figur 6 im Längsschnitt;

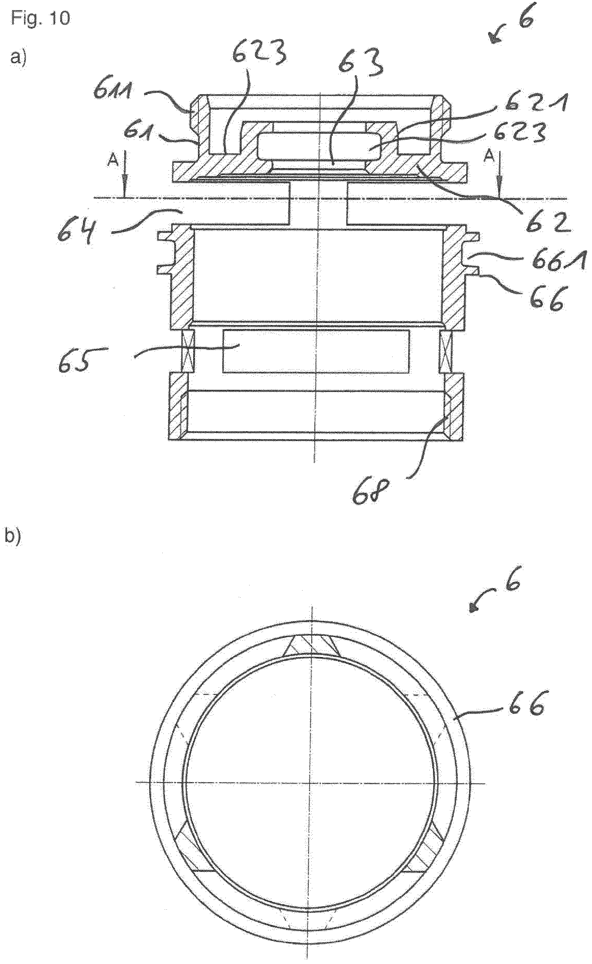

- Figur 10: die Darstellung der Durchtrittshülse des Thermostat-Mischventils aus Figur 1
a) im Längsschnitt;
b) in Schnittdarstellung A - A;

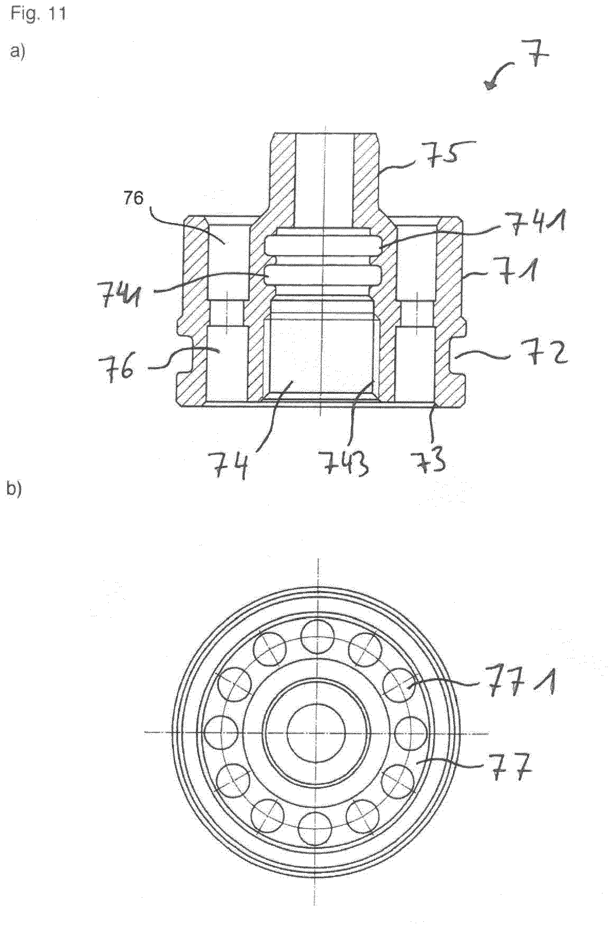

- Figur 11: die Darstellung des Schlittens des Thermostat-Mischventils aus Figur 1
a) im Längsschnitt;
b) in der Draufsicht;

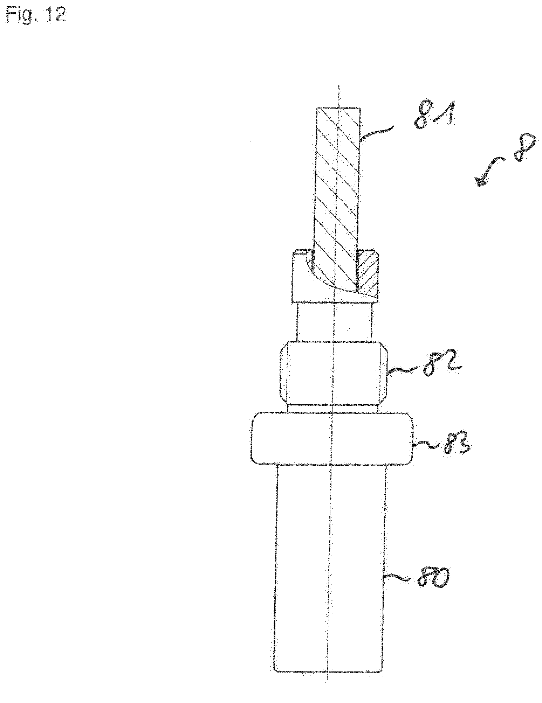

- Figur 12: die Darstellung des Thermostatelements des Thermostat-Mischventils aus Figur 1 und

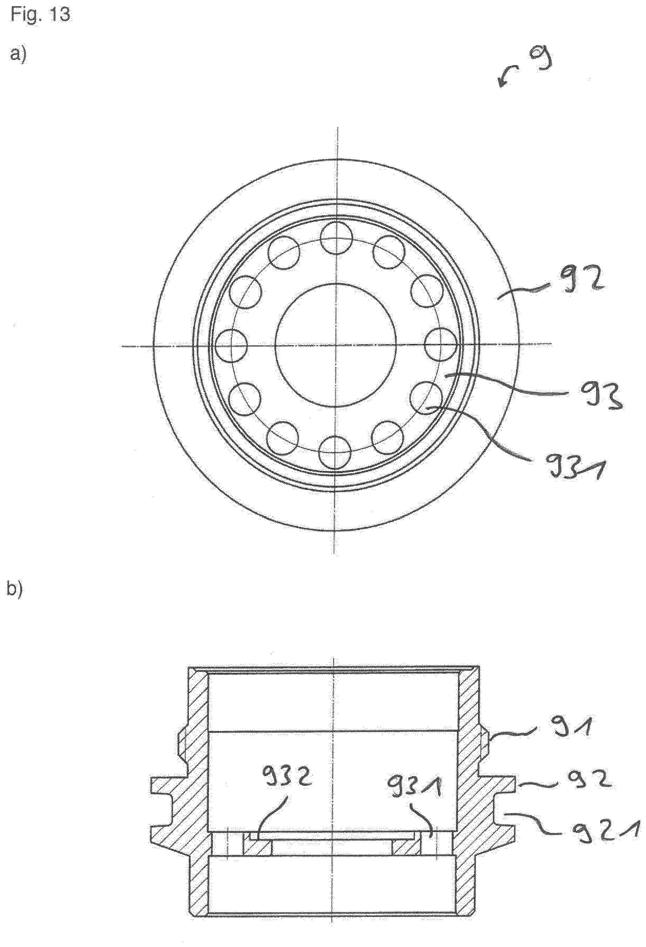

- Figur 13: die Darstellung des Bodenstücks des Thermostat-Mischventils aus Figur 1
a) in der Draufsicht;
b) im Längsschnitt.

Das als Ausführungsbeispiel gewählte Thermostat-Mischventil weist ein Kopfstück 1 auf, das endseitig mit einer drehbaren und radial geführten Spindel 2 versehen ist, welche mit einer Gewindehülse 3 korrespondiert, die über einen Gewindering 4 axial bewegbar in dem Kopfstück 1 angeordnet ist. Die Gewindehülse 3 steht in Verbindung mit einem Kegel 5, der an dem Kopfstück 1 axial geführt ist. An seinem der Spindel 2 abgewandten Ende ist das Kopfstück 1 mit einer Durchtrittshülse 6 verschraubt, in der ein Schlitten 7 beweglich angeordnet ist, der mit einem Thermoelement 8 verbunden ist. An ihrem der Spindel 2 gegenüberliegendem Ende ist in die Durchtrittshülse 6 ein Bodenstück 9 eingeschraubt.

Das Kopfstück 1 besteht aus einem symmetrischen Hohlkörper, dessen beide Stirnflächen offen sind. Im Bereich der Spindel 2 ist das Kopfstück 1 mit einem eingezogenen Rand 11 versehen, an dem die Spindel 2 axial abgestützt sowie radial geführt ist. An den Rand 11 schließt sich ein abgestufter hohlzylindrischer Teil 12 an. Beabstandet zu dem Rand 11 ist in dem hohlzylindrischen Teil 12 ein Innenvielkant 13 vorgesehen. Der Innenvielkant 13 verhindert eine Drehung des Gewinderings 4 sowie des Kegels 5 innerhalb des Kopfstücks 1. An seinem der Spindel 2 abgewandten Ende ist an dem Kopfstück ein Auflageflansch 14 angeformt, der mit Ausnehmungen 141 für den Eingriff eines Maulschlüsselwerkzeugs versehen ist. An dem Auflageflansch 14 ist ein axialer Kragen 15 angeformt, der mit einem Innengewinde 151 versehen ist. Beabstandet zu dem Auflageflansch 14 ist an dem Kragen 15 endseitig ein Absatz 152 angeformt, der eine Ringnut 16 zur Aufnahme eines Dichtrings 17 begrenzt.

Die Spindel 2 ist an ihrem einen Ende außen als Vielkant 21 ausgeführt und innen mit einem Sackloch 22 mit Innengewinde versehen, die eine Aufnahme für einen - nicht dargestellten - Drehgriff oder Hebel bilden. Beabstandet zu dem Vielkant 21 ist außen an der Spindel 2 eine Ringfläche 23 vorgesehen, mit der die Spindel 2 an dem Rand 11 des Kopfstücks 1 radial geführt ist. Die Ringfläche 23 ist von einer Ringnut 24 unterbrochen, die einen Dichtring 241 aufnimmt. Auf der dem Vielkant 21 zugewandten Seite ist im Anschluss an die Ringfläche 23 ein Einstich 25 vorgesehen, der einen Sicherungsring 251 aufnimmt, der außen auf dem Rand 11 aufliegt. Auf der dem Vielkant 21 abgewandten Seite weist die Spindel 2 im Anschluss an die Ringfläche 23 einen Spindelbund 26 auf, dessen Durchmesser größer als der der Ringfläche 23 ist. Auf dem Spindelbund 26 ist um die Ringfläche 23 herum eine Ringscheibe 261 gelegt, die beispielsweise aus Bronze hergestellt ist. Auf seiner der Ringscheibe 261 abgewandten Unterseite ist in den Spindelbund 26 eine ringförmige Ausnehmung 262 eingebracht.

Bei in das Kopfstück 1 eingesetzter Spindel 2 liegt die Ringscheibe 261 an dem eingezogenen Rand 11 an. Im Anschluss an den Spindelbund 26 ist ein Absatz 27 vorgesehen, an den sich ein Außenmehrkant 28 anschließt.

Der Außenmehrkant 28 der Spindel 2 ragt in Montagestellung in die Gewindehülse 3, die innen als Innenmehrkant 31 ausgebildet ist. Außen ist die Gewindehülse 3 mit zwei zueinander beabstandeten Gewinden 32 und 33 ausgestattet. Die Gewinde 32 und 33 sind gegenläufig ausgebildet. Die Gewindehülse 3 ist durch das Gewinde 32 mit dem Gewindering 4 verschraubt, der hierzu mit einem Innengewinde 41 versehen ist. Außen weist der Gewindering 4 auf seiner der Spindel 2 abgewandten Seite einen Außenvielkant 42 auf. Der Außenvielkant 42 korrespondiert mit dem Innenvielkant 13 des Kopfstücks 1. Der Gewindering 4 ist dadurch drehfest, jedoch axial beweglich in dem Kopfstück 1 gehalten. Mit seiner der Spindel 2 zugewandten Seite stützt sich der Gewindering 4 an dem durch die ringförmige Ausnehmung 262 der Spindelbundes 26 gebildeten Kragen 263 ab.

Der Kegel 5 besteht im Wesentlichen aus einer Buchse 51, die bodenseitig über eine Kegelscheibe 52 verschlossen ist und die einen Kegelkolben 53 aufnimmt, der über eine Spiralfeder 54 gegen die Kegelscheibe 52 vorgespannt ist.

Die Buchse 51 ist im Wesentlichen hohlzylindrisch ausgebildet. Sie weist an ihrem der Spindel 2 zugewandten Ende einen Außenvielkant 511 auf, der mit dem Innenvielkant 13 des Kopfstücks 1 korrespondiert, wodurch die Buchse 51 in dem Kopfstück 1 verdrehsicher geführt ist. Innen ist in Höhe des Außenvielkants 511 in der Buchse 51 ein Innengewinde 512 eingebracht, mittels dessen die Buchse 51 des Kegels 5 mit dem Gewinde 33 der Gewindehülse 3 verschraubt ist. Beabstandet zu dem Innengewinde 512 ist in der Buchse 51 eine Deckseite 513 eingeformt, in der zentrisch eine Führungsbohrung 514 eingebracht ist. An ihrem der Deckseite 513 gegenüberliegenden Ende ist in die Buchse 51 innen eine Ringnut 515 zur Aufnahme einer Kegelscheibe 52 eingebracht, an die sich ein Bördelsteg 516 anschließt, über den die Kegelscheibe mittels Bördelung fest mit der Buchse 51 verbunden ist.

Die Kegelscheibe 52 ist in Form einer Kreisscheibe ausgebildet, an deren der Deckseite 513 der Buchse 51 zugewandten Seite mittig ein Anschlagkegel 521 angeformt ist. Zentrisch ist in die Kegelscheibe 52 den Anschlagkegel 521 durchdringend eine Bohrung 522 eingebracht.

Der Kegelkolben 53 ist im Wesentlichen zylindrisch ausgebildet. An seinem der Kegelscheibe 52 zugewandte Ende ist ein durchmesservergrößerter Absatz 531 angeformt, der in einen wiederum durchmessererweiterten Teller 532 übergeht, wodurch im Übergang zwischen dem Absatz 531 und dem Teller 532 ein Federsitz 533 für die Spiralfeder 54 gebildet ist. Der Teller 532 ist zentrisch mit einer kegelförmigen Einformung 534 versehen, die mit dem Anschlagkegel 521 der Kegelscheibe 52 korrespondiert. Zentrisch ist in der kegelförmigen Einformung 534 ein zylinderförmiger Kolbenzapfen 535 angeformt, dessen Außendurchmesser kleiner ist, als der Innendurchmesser der Bohrung 522 der Kegelscheibe 52, in die der Kolbenzapfen 535 hineinragt. Mit seinem dem Kolbenzapfen 535 gegenüberliegenden Ende durchdringt der Kegelkolben 53 die Führungsbohrung 514 der Buchse 51, in der der Kegelkolben 53 axial geführt ist. Auf dem Federsitz 533 des Kegelkolbens 53 ist eine Spiralfeder 54 angeordnet, die sich an der gegenüberliegenden Seite an der Deckseite 513 der Buchse 41 abstützt und durch die der Kegelkolben 53 gegen die Kegelscheibe 52 vorgespannt ist.

Die Durchtrittshülse 6 ist im Wesentlichen hohlzylindrisch ausgebildet und weist an ihrem der Spindel 2 zugewandten Ende einen axialen Kragen 61 mit einem Außengewinde 611 auf, mit dem es in das Innengewinde 151 des Kopfstücks 1 einschraubbar ist. Im Anschluss an das Außengewinde 611 weist die Durchtrittshülse 6 innen einen umlaufenden radialen Kragen 62 auf, der einen Anschlag für den Schlitten 7 bildet und der eine Durchtrittsöffnung 63 für einen an dem Schlitten 7 angeformten Führungskragen 75 begrenzt. Konzentrisch zu dem axialen Kragen 61 der Durchtrittshülse 6, der mit dem Außengewinde 611 versehen ist, ist die Durchtrittsöffnung 63 umrahmend ein ringförmiger Absatz 621 angeformt, der zusammen mit dem axialen Kragen 61 eine axiale Ringnut 622 begrenzt. Weiterhin ist in den Absatz 621 eine radiale Ringnut 623 eingebracht, die einen Dichtring 624 aufnimmt.

Beabstandet zu dem radialen Kragen 62 sind in der Durchtrittshülse 6 Fenster 64 für den Wasserdurchtritt vorgesehen, die in derselben Ebene symmetrisch verteilt in ihrer Wandung ausgespart sind. Im Ausführungsbeispiel sind drei Fenster 64 vorgesehen. Die Fenster 64 sind für den Durchtritt kalten Wassers vorgesehen. Axial beabstandet zu den Fenstern 64 sind Fenster 65 für den Durchtritt warmen Wassers vorgesehen, die im Wesentlichen den gleichen Querschnitt wie die Fenster 64 aufweisen und zu den Fenstern 64 vergleichbar ausgebildet sind. Zwischen den Fenstern 64 und 65 ist an der Durchtrittshülse 6 außen umlaufend ein Steg 66 angeformt, der mit einer radialen Ringnut 661 versehen ist, die einen Dichtring 662 aufnimmt. Der Dichtring 662 trennt Warm- und Kalt-Wasserbereich. Zwischen dem Absatz 152 des Kopfstücks 1 und dem umlaufenden Steg 66 der Durchtrittshülse 6 ist umlaufend ein Siebmantelgeflecht 67 angeordnet. Das Siebmantelgeflecht 67 dient der Verhinderung von eindringenden Schmutzpartikeln.

An ihrem dem axialen Kragen 61 gegenüberliegenden Ende ist an der Durchtrittshülse 6 ein Innengewinde 68 zum Einschrauben des Bodenstücks 9 angeordnet.

Der Schlitten 7 ist im Bereich der Fenster 64 und 65 der Durchtrittshülse 6 angeordnet. Er weist außen eine Zylinderfläche 71 auf, in die eine Ringnut 72 eingebracht ist. Die Ringnut 72 nimmt einen Dichtring 721 auf, mit dem der Schlitten 7 gegen die Durchtrittshülse 6 abgedichtet ist. Auf seiner der Spindel 2 abgewandten Stirnseite ist der Schlitten 7 mit einer kreisförmigen Vertiefung 73 versehen. Auf der Vertiefung 73 stützt sich eine Schraubenfeder 69 ab. Die Schraubenfeder 69 stützt sich an ihrem anderen Ende auf der der Spindel 2 zugewandten Seite der Ringsiebscheibe 93 des Bodenstücks 9 ab, dass mit seinem Außengewinde 91 in das Innengewinde 68 der Durchtrittshülse 6 eingeschraubt ist. Zentrisch ist in den Schlitten 7 eine Durchführung 74 eingebracht, die der Aufnahme des Thermoelements 8 dient. Die Durchführung 74 ist mit Hinterdrehungen 741 zur Aufnahme von Dichtringen 742 versehen, welche das Thermoelement 8 gegen den Schlitten 7 abdichten. Die Durchführung 74 mündet in einem an den Schlitten 7 angeformten Führungskragen 75, dessen Außendurchmesser im Wesentlichen dem Innendurchmesser der Durchtrittsöffnung 63 der Durchtrittshülse 6 entspricht, durch welche der Führungskragen 75 hindurchtritt und über den Dichtring 624 gegen die Durchtrittshülse 6 abgedichtet ist. Um die Durchführung 74 sind in den Schlitten 7 auf beiden Seiten ringförmige Vertiefungen 76 eingebracht, die in einer Siebplatte 77 münden, welche mit Bohrungen 771 für den Durchtritt von durch die Fenster 64 der Durchtrittshülse 6 eintretenden Kaltwassers dienen.

Die Durchführung 74 des Schlittens 7 nimmt ein Thermoelement 8 auf, das einen Stellkolben aufweist, der durch den Führungskragen 75 hindurchtritt und durch diesen geführt ist. Das Thermoelement 8 ist in an sich bekannter Weise ausgebildet. Es enthält in einem Metallgehäuse 80 eine sich in Abhängigkeit von der Temperatur in ihrem Volumen verändernde Flüssigkeit. Je nach Temperatur wird der in dem Thermoelement 8 geführte Stellkolben 1 in Axialrichtung verstellt. Außen ist an dem Thermoelement 8 ein Außengewinde 82 angeordnet, mit dem es in ein endseitig in der Durchführung 74 des Schlittens 7 eingebrachtes Innengewinde 743 eingeschraubt ist. Beabstandet zu dem Außengewinde 82 ist weiterhin ein dieses überragender Absatz 83 angeformt, der an dem Schlitten 7 anliegt.

Das Bodenstück 9 ist im Wesentlichen hohlzylindrisch ausgebildet und an seiner Außenseite mit einem Außengewinde 91 zum Einschrauben in das Innengewinde 68 der Durchtrittshülse 6 versehen. Beabstandet zu dem Außengewinde 91 ist ein umlaufender Steg 92 an das Bodenstück 9 angeformt, der mit einer Ringnut 921 zur Aufnahme eines Dichtrings 922 versehen ist. Unterhalb der Ringnut 921 ist in das Bodenstück 9 innen eine Ringsiebscheibe 93 angeordnet, die umlaufend mit Bohrungen 931 für den Wasserdurchtritt versehen ist. An ihrer der Durchtrittshülse 6 zugewandten Seite ist die Ringsiebscheibe 93 mit einer Vertiefung 923 zur Anlage der Schraubenfeder 69 versehen. Der Innendurchmesser der Ringsiebscheibe 93 ist größer als das Gehäuse 80 des Thermoelements 8, das durch die Ringsiebscheibe 93 hindurchtritt.

Die Durchtrittshülse 6 bildet mit dem mit einem Thermoelement 8 versehenen Schlitten 7 sowie dem mit dieser verschraubten Bodenstück 9 eine Baugruppe aus, die als solche an die Baugruppe des Kopfstücks 1 angeschraubt ist. Hierbei ragt der durch den Führungskragen 75 des Schlittens 7 hindurchtretende Stellkolben 81 des Thermoelements 8 in die einen Koppelkanal ausbildende Bohrung 522 der Kegelscheibe 52 des Kegels 5 hinein, wo er an dem Kolbenzapfen 535 des Kegelkolbens 53, der von der gegenüberliegenden Seite durch die Bohrung 522 der Kegelscheibe 52 hineinragt, in Kontakt tritt.

Das Mischventil ist im montierten Zustand fest in eine Armatur eingesetzt. Eine Drehung der Spindel 2 über den Vielkant 21 mittels eines - nicht dargestelltes - Drehgriffs führt aufgrund der ineinandergreifenden Vielkante 28, 31 von Spindel 2 und Gewindehülse 3 zu einer Drehbewegung der Gewindehülse 3. Die Drehbewegung der Gewindehülse 3 führt einerseits aufgrund der drehfesten Anordnung des Gewinderings 4 zu einer Axialbewegung der Gewindehülse 3 selbst sowie aufgrund der drehfesten Anordnung des Kegels 5 in dem Kopfstück 1 durch die Kombination der Vielkante 13, 511 von Kopfstück 1 und Kegel 5 zu einer Axialbewegung des Kegels 5. Eine solche Axialbewegung des Kegels 5 bewirkt über den Kontakt des Kegelkolbens 53 mit dem Stellkolben 81 des Thermoelements 8 eine Verschiebung des das Thermoelement 8 aufnehmenden Schlittens 7, wodurch die gewünschte Mischstellung des Schlittens 7 zwischen den Fenstern 64 (Kaltwasserdurchtritt) und 65 (Warmwasserdurchtritt) erzielt wird. Der Schlitten 7 wird dabei gegen die Federspannung der Feder 69 bewegt. Das durch die Fenster 64, 65 einströmende Kalt- und Warmwasser umspült das Thermoelement 8, welches über den Stellkolben 81 die Einregelung der gewünschten Temperatur übernimmt.

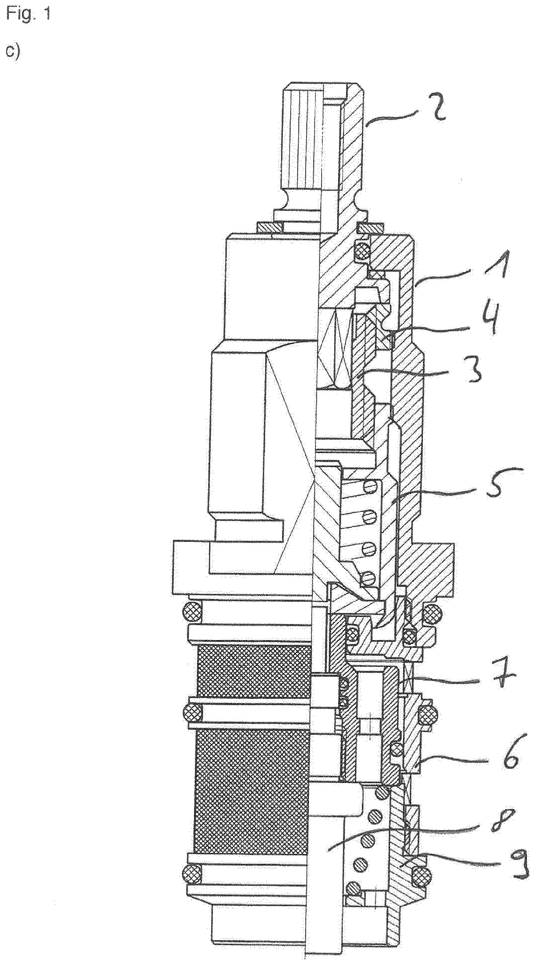

Eine weitere Drehung der Spindel 2 in diese Richtung bewirkt eine Axialbewegung des Kegels 5 in Richtung Bodenstück 9, wodurch in Endstellung das Fenster 64 für den Kaltwasserdurchtritt vollständig geöffnet und das Fenster 65 für den Warmwasserdurchtritt geschlossen ist (vgl. Figur 1c). In dieser Endstellung wird der Stellkolben 81 des Thermoelements 8 durch die sich zusammenziehende in dem Gehäuse 80 befindliche Flüssigkeit eingefahren, bis der Stellkolben 81 und der Kegelkolben 53 außer Kontakt sind. In dieser Stellung liegt die Kegelscheibe 52 des Kegels 5 auf dem Führungskragen 75 des Schlittens 7 auf, wobei der Bördelsteg 516 in die axiale Ringnut 622 des radialen Kragens 62 eingreift. Der Schlitten 7 ist so über den direkten Kontakt mit der Kegelscheibe 52 des Kegels 5 - unter Umgehung des Thermoelements 8 - manipulierbar.

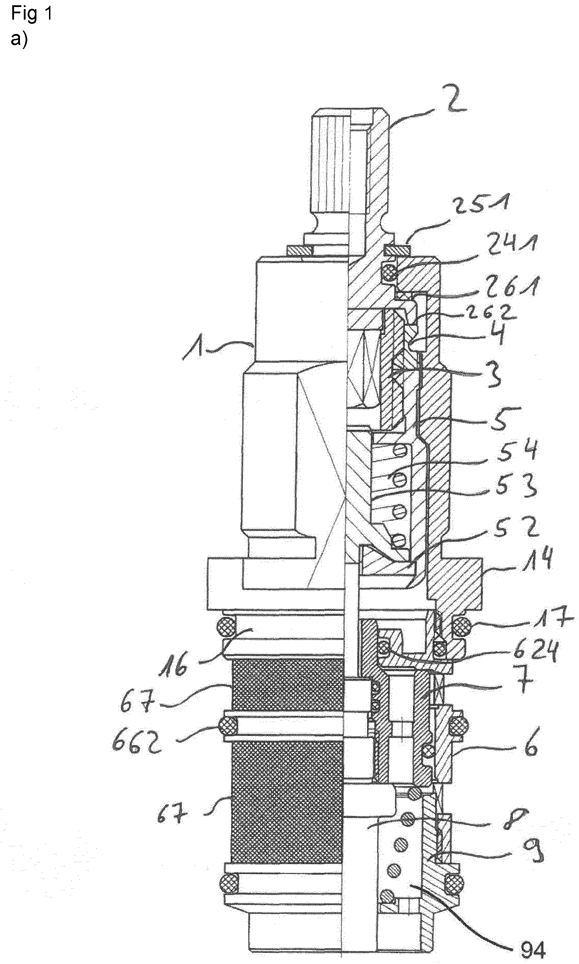

Eine Drehung der Spindel 2 in die entgegengesetzte Richtung bewirkt eine Axialbewegung des Kegels 5 in Richtung der Spindel 2. Diese Axialbewegung ist begrenzt durch den Anschlag der einander zugewandten Stirnseiten der Gewindehülse 3 und des Kegels 5. Die Axialbewegung wird in Abhängigkeit der Stellung des Kegels 5 bzw. des Schlittens 7 von den Federn 69, 54 unterstützt. Zwar ist der Kegel 5 mit dem Schlitten 7 nicht direkt verbunden; unter dem Einfluss der Feder 69 bewegt sich jedoch der Schlitten 7 in Richtung der Spindel 2. In dieser Endstellung ist das Fenster 64 für den Kaltwasserdurchtritt verschlossen; das Fenster 65 für den Warmwasserdurchtritt ist geöffnet (vgl. Figur 1a).

Das Mischventil steht unter dem Einfluss des in dem Rohrleitungssystems, an das das Mischventil angeschlossen ist, herrschenden Drucks. Dieser Druck ruft eine Kraft in axialer Richtung hervor, die auf den Kegel 5 in Richtung der Spindel 2 einwirkt. Ebenfalls kann eine Kraft in diese Richtung entstehen, wenn die Feder 54 durch ihre Anlage an dem Kegelkolben 53 und dessen Anlage an dem Stellkolben 81 des Thermoelements 8 durch Ausfahren des Stellkolbens 81 komprimiert wird und somit eine axiale Kraft auf den Kegel 5 in Richtung der Spindel 2 erzeugt. Da der Kegel 5, die Gewindehülse 3 sowie der Gewindering 4 über Gewinde miteinander verbunden sind, ist eine Axialbewegung dieser drei Teile zueinander ohne gleichzeitige Verdrehung untereinander nicht möglich. Eine ungewollte Verdrehung der drei Teile zueinander ist dadurch verhindert, dass ein aufgrund der Kraft von Kegel 5 in Axialrichtung zurückgelegter Weg ohne Wegverluste über die Gewindehülse 3 an den Gewindering 4 übertragen wird. Der Gewindering 4 drückt durch seine axial bewegliche Lagerung im Kopfstück 1 gegen den Spindelbund 26 der Spindel 2. Die Spindel 2 erfährt dadurch ebenfalls eine Axialkraft, die sie mittels des Spindelbundes 26 auf den Ring 261 weitergibt, der sie auf der Innenseite des eingezogenen Randes 11 des Kopfstücks 1 abstützt. Dadurch ist der Bund 26 der Spindel 2 zwischen dem Gewindering 4 und dem Ring 261 gepresst gehalten, wodurch eine Drehbewegung der Spindel 2 und damit eine selbsttätige Veränderung der vom Benutzer gewählten Einstellung wirksam verhindert ist. Die axialfreie Lagerung der Gewindehülse 3 und das Weiterleiten der axialen Kraft auf den Spindelbund 26, der wiederum an dem eingezogenen Rand 11 des Kopfstücks 1 anliegt, ist im Wesentlichen als Scheibenbremse zu betrachten. Das Vorsehen des Rings 261, wie dies im vorliegenden Fall dargestellt ist, dient zusätzlich zur Minimierung des Verschleißes.

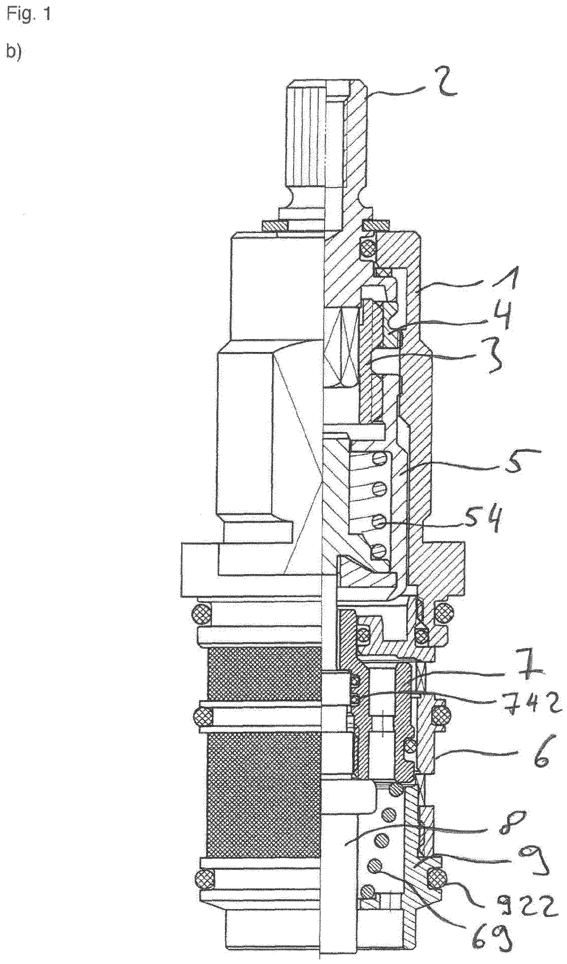

Die Regelung des Mischventils mit Hilfe des Thermoelements 8 erfolgt folgendermaßen: Bei der in Figur 1a) dargestellten Position des Schlittens 7 strömt nur warmes Wasser durch die Fenster 65 der Durchtrittshülse 6 in die das Gehäuse 80 des Thermoelements 8 umgebene Mischkammer 94 die innerhalb des Bodenstücks 9 gebildet ist. Das Metallgehäuse 80 leitet die hohe Temperatur des Wassers an die innerhalb des Gehäuses befindliche Flüssigkeit weiter, deren Volumen sich unter der Einwirkung der hohen Temperatur vergrößert. Hierdurch wird der Stellkolben 81 in Richtung der Spindel 2 bewegt, wodurch zugleich der mit dem Stellkolben 81 in Kontakt befindliche Kegelkolben 53 in Richtung der Spindel 2 mit einer Kraft beaufschlagt wird. Da jedoch die Vorspannkraft der Feder 54 größer ist, als die Vorspannkraft der Feder 69, verändert der Kegelkolben 53 seine Position nicht; vielmehr wird das Thermoelement 8 sowie der mit diesem verbundene Schlitten 7 in die entgegengesetzte Richtung bewegt, wodurch im Bereich des Fensters 64 vom Schlitten 7 ein Spalt freigegeben wird, sodass auch kaltes Wasser in die Mischkammer 94 einströmen kann (vgl. Figur 1b).

Vergleichbares gilt für den Fall, dass allein kaltes Wasser in die Mischkammer 94 einströmt. In diesem Fall reduziert sich das Volumen der in dem Metallgehäuse 80 des Thermoelements 8 befindlichen Flüssigkeit, wodurch der Stellkolben 81 nach unten bewegt wird. Unter dem Einfluss der Feder 69 wird in diesem Fall der Schlitten 7 gemeinsam mit dem Thermoelement 8 in Richtung der Spindel 2 bewegt, wodurch der Eintritt warmen Wassers durch die Fenster 65 in die Mischkammer 94 ermöglicht ist.

Durch diese vorstehend dargestellte Möglichkeit der Kopplung von Kegelscheibe 52 und Schlitten 7 ist zusätzlich eine Sicherungsfunktion erzielt. Ist beispielsweise das Thermoelement 8 defekt, seine mechanische Verbindung zu dem Schlitten 7 unterbrochen oder fehlt gänzlich, so ist das Mischventil nicht mehr in der Lage, eine annähernd konstante Temperatur einzuregeln. In diesem Fall kommt es dazu, dass der Kaltwasserzulauf abgesperrt und der Heißwasserzulauf vollständig geöffnet wird, wodurch für den Benutzer die Gefahr einer Verbrühung besteht, da in diesem Fall allein heißes Wasser in die Mischkammer 94 gelangt. Durch Drehung der Spindel 2 in Richtung der Einstellung "kaltes Wasser" durch den Benutzer wird der Kegel 5 axial in Richtung des Schlittens bewegt. Dabei wird die Kegelscheibe 52 des Kegels 5 über die Spindel 2 auf den Führungskragen 75 des Schlittens 7 gefahren, wodurch dieser in Kaltwasserposition zurückgefahren wird und der Heißwasserzulauf verschlossen wird. Hierdurch ist die Gefahr eines Verbrühens für den Benutzer vermieden.

## Patentansprüche

1. Thermostat-Mischventil für Sanitärarmaturen, mit einem Kopfstück (1), in dem über eine drehbar gelagerte Spindel (2) ein Kegel (5) axial bewegbar angeordnet ist, und einer Durchtrittshülse (6) mit Fenstern (64, 65) für den Zulauf von warmen und kalten Wasser, in der ein über eine Feder (69) vorgespannter Schlitten (7) axial bewegbar ist, der mit einem einen Stellkolben (81) aufweisenden Thermoelement (8) verbunden ist, wobei in Abhängigkeit der Bewegung des Schlittens der Zulauf von warmen und kalten Wasser durch die Fenster regelbar ist, **dadurch gekennzeichnet, dass** der Kegel (5) eine Buchse (51) umfasst, die an ihrer der Spindel (2) abgewandten Unterseite über einen Boden (52) verschlossen ist und in der ein Kegelkolben (53) axial bewegbar angeordnet ist, der in Richtung des Bodens (52) über eine Feder (54) vorgespannt ist, wobei in dem Boden ein mit dem Kegelkolben (53) axial fluchtender Koppelkanal (522) angeordnet ist, der zugleich axial mit dem Stellkolben (81) des Thermoelements (8) fluchtet, und in den der Kegelkolben (53) und/oder der Stellkolben (81) des Thermoelements (8) hineinbewegbar sind und wobei in einer oberen Stellung des Schlittens (7) (Warmwasserposition) der Stellkolben (81) an dem Kegelkolben (53) anliegt und der Boden beabstandet zu dem Schlitten (7) ist und in einer unteren Stellung des Schlittens (7) (Kaltwasserposition) der Stellkolben (81) beabstandet zu dem Kegelkolben (53) ist und der Boden auf dem Schlitten (7) aufliegt.

2. Thermostat-Mischventil nach Anspruch 1, **dadurch gekennzeichnet, dass** die Buchse (51) an ihrer der Spindel (2) zugewandten Oberseite über eine Deckseite (513) verschlossen ist, die eine Führungsbohrung (514) aufweist, in welcher der Kegelkolben (53) geführt ist.

3. Thermostat-Mischventil nach Anspruch 1 oder 2, **dadurch gekennzeichnet, dass** der Kegelkolben (53) einen Kolbenzapfen (535) aufweist, mit dem er in den Koppelkanal hineinragt.

4. Thermostat-Mischventil nach einem der vorgenannten Ansprüche, **dadurch gekennzeichnet, dass** die Buchse (51) an ihrem der Spindel (2) abgewandten Ende eine Kegelscheibe (52) mit einem Anschlagkörper, vorzugsweise in Form eines Anschlagkegels (521) oder Anschlagzylinders aufweist, der zentrisch mit einer Bohrung (522) versehen ist, die den Koppelkanal bildet, welche Kegelscheibe (52) den Boden der Buchse bildet, mit der sie fest verbunden ist.

5. Thermostat-Mischventil nach Anspruch 4, **dadurch gekennzeichnet, dass** die Kegelscheibe (52) an die Buchse (51) angebördelt ist.

6. Thermostat-Mischventil nach Anspruch 4 oder 5, **dadurch gekennzeichnet, dass** der Kegelkolben (53) eine Einformung (534) aufweist, die mit dem Anschlagkörper (521) der Kegelscheibe (52) korrespondiert und durch die der Anschlagkörper (521) zumindest bereichsweise, vorzugsweise vollständig aufnehmbar ist.

7. Thermostat-Mischventil nach einem der vorgenannten Ansprüche, **dadurch gekennzeichnet, dass** das Kopfstück (1) an seinem der Spindel (2) entgegengesetzten Ende einen mit einem Innengewinde (151) versehenen axialen Kragen (15) aufweist, in das die Durchtrittshülse (6) einschraubbar ist, die hierzu mit einem Außengewinde (611) versehen ist, wobei sich der Kegel (5) in seiner oberen, der Spindel (2) zugewandten Endstellung oberhalb des Kragens (15) befindet.

8. Thermostat-Mischventil nach Anspruch 7, **dadurch gekennzeichnet, dass** an dem Kragen (15) endseitig ein umlaufender Absatz (152) angeformt ist, der eine radiale Dichtungsnut (16) begrenzt, die einen Dichtring (17) aufnimmt und dass an der Durchtrittshülse (6) zwischen deren Fenstern (64, 65) ein umlaufender Steg (66) angeordnet ist, der eine radiale Dichtungsnut (661) aufweist, die einen Dichtring (662) aufnimmt, wobei zwischen dem Absatz (151) des Kopfstücks (1) und dem Steg (66) der Durchtrittshülse (6) bevorzugt ein Siebmantelgeflecht (67) angeordnet ist.

9. Thermostat-Mischventil nach einem der vorgenannten Ansprüche, **dadurch gekennzeichnet, dass** die Durchtrittshülse (6) mit einem Bodenstück (9) versehen ist, das einen Raum begrenzt, in dem der mit dem Thermoelement (8) verbundene Schlitten (7) angeordnet ist.

10. Thermostat-Mischventil nach einem der vorgenannten Ansprüche, **dadurch gekennzeichnet, dass** die Durchtrittshülse (6) an ihrer der Spindel (2) zugewandten Oberseite einen umlaufenden radialen Kragen (62) aufweist, der einen Anschlag für den Schlitten (7) bildet und der eine Durchtrittsöffnung (63) für einen an dem Schlitten (7) angeformten Führungskragen (75) begrenzt, in dem der Stellkolben (81) des Thermostatelements (8) geführt ist, wobei bevorzugt der Führungskragen (75) des Schlittens (7) mit dem Koppelkanal fluchtet, wodurch der Koppelkanal fortgeführt ist.

11. Thermostat-Mischventil nach Anspruch 10, **dadurch gekennzeichnet, dass** die Durchtrittshülse (6) einen axialen Kragen (61) aufweist, der mit dem Außengewinde (611) versehen ist, wobei konzentrisch zu dem Kragen (61) die Durchtrittsöffnung (63) umrahmend ein ringförmiger Absatz (621) angeformt ist, wodurch eine Ringnut (622) begrenzt ist, wobei bevorzugt an der Buchse (51) an ihrer der Spindel (2) angewandten Seite ein umlaufender Steg (516) angeordnet ist, dessen Innendurchmesser im Wesentlichen dem Außendurchmesser des ringförmige Absatzes (621) der Durchtrittshülse (6) entspricht und der in die Ringnut (622) einführbar ist.

12. Thermostat-Mischventil nach Anspruch 11, **dadurch gekennzeichnet, dass** in dem ringförmigen Absatz (621) eine radiale Dichtungsnut (623) eingebracht ist, die einen Dichtring (624) aufnimmt.

13. Thermostat-Mischventil nach einem der Ansprüche 9 bis 12, **dadurch gekennzeichnet, dass** das Bodenstück (9) bodenseitig eine Ringsiebscheibe (93) aufweist, durch welche das Thermoelement (8) hindurchragt, wobei bevorzugt zwischen der Ringsiebscheibe (93) und dem Schlitten (7) eine Feder (69) angeordnet ist, über den der Schlitten (7) in Richtung des radialen Kragens (62) der Durchtrittshülse (6) vorgespannt ist.

14. Thermostat-Mischventil nach einem der Ansprüche 9 bis 13, **dadurch gekennzeichnet, dass** das Bodenstück (9) mit einem Außengewinde (91) versehen ist, mit dem es in ein endseitig in der Durchtrittshülse (6) angeordnetes Innengewinde (68) einschraubbar ist.

15. Thermostat-Mischventil nach Anspruch 14, **dadurch gekennzeichnet, dass** an dem Bodenstück (9) das Außengewinde (91) begrenzend ein umlaufender Steg (92) angeordnet ist, der eine radiale Dichtungsnut (921) aufweist, die einen Dichtring (922) aufnimmt, wobei zwischen dem Steg (66) der Durchtrittshülse (6) und dem Steg (92) des Bodenstücks (9) bevorzugt ein Siebmantelgeflecht (67) angeordnet ist.

## Claims

1. Thermostat mixing valve for sanitary fittings having a head piece (1), in which a cone (5) is axially movably arranged via a rotatably mounted spindle (2), and a passage sleeve (6) with windows (64, 65) for the inflow of hot and cold water, in which a carriage (7) prestressed via a spring (69) is axially movable, which is connected to a thermocouple (8) having a set piston (81), wherein, in dependence of the movement of the carriage, the inflow of hot and cold water is adjustable by the windows, **characterised in that** the cone (5) comprises a bush (51), which is closed via a bottom (52) on its underside facing away from the spindle (2) and in which a conical piston (53) is axially movably arranged, which is prestressed in the direction of the bottom (52) via a spring (54), wherein a coupling channel (522), which is axially aligned with the conical piston (53), is arranged in the bottom, which is at the same time axially aligned with the set piston (81) of the thermocouple (8) and into which the conical piston (53) and/or the set piston (81) of the thermocouple (8) can be moved and wherein in an upper position of the carriage (7) (hot water position), the set piston (81) abuts against the conical piston (53) and the bottom is spaced apart from the carriage (7) and in a lower position of the carriage (7) (cold water position), the set piston (81) is spaced apart from the conical piston (53) and the bottom rests on the carriage (7).

2. Thermostat mixing valve according to claim 1, **characterised in that** the bush (51) is closed on its upper side facing the spindle (2) via a cover side (513), which has a guide bore (514), in which the conical piston (53) is guided.

3. Thermostat mixing valve according to claim 1 or 2, **characterised in that** the conical piston (53) has a piston pin (535), with which it protrudes into the coupling channel.

4. Thermostat mixing valve according to one of the previous claims, **characterised in that** the bush (51), on its end facing away from the spindle (2), has a conical disc (52) with a stop body, preferably in the shape of a stop cone (521) or a stop cylinder, which is centrally provided with a bore (522), which forms the coupling channel, which conical disc (52) forms the bottom of the bush, to which it is firmly connected.

5. Thermostat mixing valve according to claim 4, **characterised in that** the conical disc (52) is crimped to the bush (51).

6. Thermostat mixing valve according to claim 4 or 5, **characterised in that** the conical piston (53) has a recess (534), which corresponds with the stop body (521) of the conical disc (52) and by which the stop body (521) can at least partially, preferably entirely be received.

7. Thermostat mixing valve according to one of the previous claims, **characterised in that** the head piece (1) has an axial collar (15) on its end opposite the spindle (2), which is provided with an internal thread (151), in which the passage sleeve (6) can be screwed, which is provided with an external thread (611) for this purpose, wherein the cone (5) in its upper end position facing the spindle (2) is located above the collar (15).

8. Thermostat mixing valve according to claim 7, **characterised in that** a circumferential shoulder (152) is moulded on the collar (15), at the end, which delimits a radial sealing groove (16), which receives a sealing ring (17) and that at the passage sleeve (6) between its windows (64, 65) a circumferential web (66) is arranged, which has a radial sealing groove (661), which receives a sealing ring (662), wherein between the shoulder (151) of the head piece (1) and the web (66) of the passage sleeve (6) preferably a braided sieve jacket (67) is arranged.

9. Thermostat mixing valve according to one of the previous claims, **characterised in that** the passage sleeve (6) is provided with a bottom piece (9), which delimits a space in which the carriage (7), which is connected to the thermocouple (8), is arranged.

10. Thermostat mixing valve according to one of the previous claims, **characterised in that** the passage sleeve (6) on its upper side facing the spindle (2) has a circumferential radial collar (62), which forms a stop for the carriage (7) and which delimits a through opening (63) for a guide collar (75) moulded on the carriage (7), in which the set piston (81) of the thermocouple (8) is guided, wherein preferably the guide collar (75) of the carriage (7) is aligned with the coupling channel, thereby continuing the coupling channel.

11. Thermostat mixing valve according to claim 10, **characterised in that** the passage sleeve (6) has an axial collar (61), which is provided with the external thread (611), wherein an annular shoulder (621) is moulded-on concentrically to the collar (61) framing the through opening (63), thereby delimiting an annular groove (622), wherein preferably on the bush (51) on its side facing away from the spindle (2), a circumferential web (516) is arranged, whose inner diameter substantially corresponds to the outer diameter of the annular shoulder (621) of the passage sleeve (6) and in which the annular groove (622) can be inserted.

12. Thermostat mixing valve according to claim 11, **characterised in that** in the annular shoulder (621) a radial sealing groove (623) is inserted, which receives a sealing ring (624).

13. Thermostat mixing valve according to one of claims 9 to 12, **characterised in that** the bottom piece (9) has an annular sieve disc (93) on the bottom side, through which the thermocouple (8) protrudes, wherein, preferably between the annular sieve disc (93) and the carriage (7), a spring (69) is arranged, via which the carriage (7) is prestressed in the direction of the radial collar (62) of the passage sleeve (6).

14. Thermostat mixing valve according to one of claims 9 to 13, **characterised in that** the bottom piece (9) is provided with an external thread (91), with which it can be screwed into an internal thread (68) arranged at the end in the passage sleeve (6).

15. Thermostat mixing valve according to claim 14, **characterised in that** a circumferential web (92) is arranged at the bottom piece (9) delimiting the external thread (91), which has a radial sealing groove (921), which receives a sealing ring (922), wherein between the web (66) of the passage sleeve (6) and the web (92) of the bottom piece (9) preferably a braided sieve jacket (67) is arranged.

## Revendications

1. Vanne de mélange thermostatique pour robinetteries sanitaires, comprenant une pièce têtière (1) dans laquelle est disposé un cône (5) déplaçable axialement via une broche (2) en appui lui permettant de tourner, et une douille de passage (6) comportant des orifices (64, 65) d'arrivée de l'eau chaude et de l'eau froide, douille dans laquelle un chariot (7) précontraint par un ressort (69) est déplaçable axialement, chariot qui est relié à un thermocouple (8) qui présente un piston d'ajustement (81),
sachant qu'en fonction du mouvement du chariot l'arrivée d'eau chaude et d'eau froide par les orifices peut être régulée,
**caractérisée en ce que** le cône (5) comprend une douille (51) obturée via un fond (52) sur son côté inférieur ne regardant pas la broche (2) et dans laquelle douille un piston conique (53) est disposé déplaçable axialement, piston qui est précontraint via un ressort (54) en direction du fond (52),
sachant que dans le fond est disposé un canal de couplage (522) situé dans l'alignement axial du piston conique (53), canal qui se trouve en même temps dans l'alignement axial du piston d'ajustement (81) du thermocouple (8) et vers l'intérieur duquel sont déplaçable le piston conique (53) et/ou le piston d'ajustement (81) du thermocouple (8)
et sachant que dans une position supérieure du chariot (7) (position eau chaude) le piston d'ajustement (81) applique contre le piston conique (53), que le fond se trouve à distance du chariot (7) et que dans une position inférieure du chariot (7) (position eau froide) le piston d'ajustement (81) se trouve à distance du piston conique (53) et que le fond applique sur le chariot (7).

2. Vanne de mélange thermostatique selon la revendication 1, **caractérisée en ce que** la douille (51) est, sur son côté supérieur regardant la broche (2), obturée via un côté couvercle (513) présentant un alésage de guidage (514) dans lequel est guidé le piston conique (53).

3. Vanne de mélange thermostatique selon la revendication 1 ou 2, **caractérisée en ce que** le piston conique (53) présente un téton (535) avec lequel il fait saillie dans le canal de couplage.

4. Vanne de mélange thermostatique selon l'une des revendications précédentes, **caractérisée en ce que** la douille (51) présente, en son extrémité ne regardant pas la broche (2), une rondelle conique (52) présentant un corps butée, de préférence en forme de cône butée (521) ou de cylindre butée muni en son centre d'un alésage (522) qui forme le canal de couplage, laquelle rondelle conique (52) forme le fond de la douille avec laquelle elle est fermement reliée.

5. Vanne de mélange thermostatique selon la revendication 4, **caractérisée en ce que** la rondelle conique (52) est bordée contre la douille (51).

6. Vanne de mélange thermostatique selon la revendication 4 ou 5, **caractérisée en ce que** le piston conique (53) présente un creux modelé (534) épousant le corps butée (521) de la rondelle conique (52) et dans lequel creux le corps butée (521) peut être logé au moins en partie et de préférence entièrement.

7. Vanne de mélange thermostatique selon l'une des revendications précédentes, **caractérisée en ce que** la pièce têtière (1) présente, en son extrémité opposée à la broche (2), un col (15) axial muni d'un filetage intérieur (151), col dans lequel peut être vissée la douille de passage (6) qui à cette fin est munie d'un filetage extérieur (611), sachant que le cône (5), lorsqu'en position supérieure finale regardant la broche (2), se trouve au-dessus du col (15).

8. Vanne de mélange thermostatique selon la revendication 7, **caractérisée en ce que** contre le col (15), à l'extrémité, est modelé un talon (152) périphérique délimitant une gorge d'étanchéité (16) radiale qui reçoit une bague d'étanchéité (17) et **en ce que** contre la douille de passage (6), entre les orifices (64, 65), est disposée une nervure périphérique (66) présentant une gorge d'étanchéité (661) radiale qui reçoit une bague d'étanchéité (662), sachant qu'entre le talon (151) de la pièce têtière (1) et la nervure (66) de la douille de passage (6) est disposé de préférence un treillis filtrant (67) cylindrique.

9. Vanne de mélange thermostatique selon l'une des revendications précédentes, **caractérisée en ce que** la douille de passage (6) est équipée d'une pièce fond (9) délimitant un volume dans lequel est disposé le chariot (7) relié au thermocouple (8).

10. Vanne de mélange thermostatique selon l'une des revendications précédentes, **caractérisée en ce que** la douille de passage (6) présente, sur son côté supérieur regardant la broche (2), un col (62) radial périphérique formant butée pour le chariot (7) et qui délimite un orifice de passage (63) pour un col de guidage (75) modelé contre le chariot (7), col dans lequel est guidé le piston d'ajustement (81) de l'élément thermostat (8), sachant que de préférence le col de guidage (75) du chariot (7) est dans l'alignement du canal de couplage, ce qui a pour effet de prolonger ledit canal.

11. Vanne de mélange thermostatique selon la revendication 10, **caractérisée en ce que** la douille de passage (6) présente un col axial (61) muni du filetage extérieur (611), sachant que concentriquement au col (61) est modelé l'orifice de sortie (63) encadrant un talon annulaire (621), ce qui délimite une gorge annulaire (622), sachant que de préférence contre la gorge (51), sur son côté ne regardant pas la broche (2), est disposée une nervure périphérique (516) dont le diamètre intérieur correspond pour l'essentiel au diamètre extérieur du talon annulaire (621) de la douille de passage (6) et qui peut être introduite dans la gorge annulaire (622).

12. Vanne de mélange thermostatique selon la revendication 11, **caractérisée en ce que** dans le talon annulaire (621) est ménagée une gorge d'étanchéité (623) radiale recevant une bague d'étanchéité (624).

13. Vanne de mélange thermostatique selon l'une des revendications 9 à 12, **caractérisée en ce que** la pièce fond (9) présente côté fond une rondelle filtrante annulaire (93) à travers laquelle fait saillie le thermocouple (8), sachant que de préférence entre la rondelle filtrante annulaire (93) et le chariot (7) est disposé un ressort (69) via lequel le chariot (7) est précontraint en direction du col radial (62) de la douille de passage (6).

14. Vanne de mélange thermostatique selon l'une des revendications 9 à 13, **caractérisée en ce que** la pièce de fond (9) est munie d'un filetage extérieur (91) permettant de la visser dans un filetage intérieur (68) disposé à l'extrémité dans la douille de passage (6).

15. Vanne de mélange thermostatique selon la revendication 14, **caractérisée en ce que** contre la pièce de fond (9) est disposée une nervure (92) périphérique délimitant le filetage extérieur (91) et présentant une gorge (921) radiale pour joint qui reçoit une bague d'étanchéité (922), sachant qu'entre la nervure (66) de la douille de passage (6) et la nervure (92) de la pièce de fond (9) est disposé de préférence un treillis filtrant (67) cylindrique.
